# EUROPEAN PATENT APPLICATION

(11) **EP 4 358 193 A1**
(43) Date of publication of application: **24.04.2024**
(21) Application number: 22950447.7
(22) Date of filing: 09.08.2022
(51) Int. Cl.: H01M 4/62

(54) **NEGATIVE ELECTRODE SHEET AND SECONDARY BATTERY**

(71) Applicant: Contemporary Amperex Technology Co., Limited, Ningde City, Fujian 352100 (CN)
(72) Inventor: WANG, Xinghui, Ningde City Fujian 352100 (CN); LIU, Huihui, Ningde City Fujian 352100 (CN); ZHANG, Wenmeng, Ningde City Fujian 352100 (CN); CHEN, Shuhua, Ningde City Fujian 352100 (CN)
(74) Representative: Jacob, Reuben Ellis
(86) International application number: PCT/CN2022/111134
(87) International publication number: WO 2024/031327

(57) **Abstract**

The present application provides a negative electrode plate, comprising a current collector and a negative electrode film layer, wherein the negative electrode film layer comprises a negative electrode active material, a copolymer formed by acrylonitrile and acrylic acid components, and a polyol. Optionally, the negative electrode film layer further comprises a polyether. The cross-linked polymer and polyether described in the present application can reduce the rebound rate of the negative electrode plate during cycling, thereby improving the capacity retention rate of the battery.

## Description

### Technical Field

The present application relates to a negative electrode plate. In addition, the present application further relates to a secondary battery comprising the negative electrode plate.

### Background Art

In recent years, with an increasingly wide application range of secondary ion batteries, the lithium ion batteries are widely used in energy storage power systems such as hydroelectric, thermal, wind and solar power stations, as well as electric tools, electric bicycles, electric motorcycles, electric vehicles, military equipment, aerospace and other fields. Due to the great development of secondary ion batteries, higher requirements have also been placed on the secondary ion batteries in terms of capacity and cycling performance.

An improvement for the binder in the negative electrode plate is a way to improve the performance of the secondary batteries. However, the existing binder still has the problem of high brittleness of the negative electrode film layer, which is not beneficial to the processing of the electrode plate and the cycling performance of the secondary battery. Therefore, there is still a need for improvement in the binder for the negative electrode plate.

### Summary of the Invention

The present application is made in view of the above-mentioned problems, and the objective thereof is to provide a negative electrode plate, and the negative electrode film layer of the negative electrode plate comprises a cross-linked polymer as a binder, which can enhance and maintain the restraint on the active materials and improve the bonding force between the materials in the film layer, thereby improving the capacity and cycling performance of a secondary battery.

In order to achieve the above-mentioned objective, a first aspect of the present application a first aspect of the present application provides a negative electrode plate, comprising a current collector and a negative electrode film layer, wherein the negative electrode film layer comprises a negative electrode active material and the following components:
(A) a copolymer formed from the following components:
   (a) acrylonitrile;
   (b) carboxylic acid containing 3 to 6 carbon atoms and at least one double bond, optionally acrylic acid; and
   (c) optionally other components, which are optionally selected from one or more of methacrylic acid, acrylate, hydroxyethyl acrylate, vinyl acetate and dimethyl diallyl ammonium chloride; and
(B) a polyol, optionally one or more of polyvinyl alcohol, ethylene glycol, propylene glycol, glycerol, trimethylolpropane, pentaerythritol and 1,4-butanediol.

According to the present application, the negative electrode film layer comprises the cross-linked polymer described above as a binder, and the cross-linked polymer is obtained by an esterification and cross-linking reaction between a copolymer of acrylonitrile and acrylic acid and a polyol cross-linking agent. It is now believed that the cross-linked polymer has a three-dimensional network structure, which can not only have strong bonding force but also have strong restraint on the active materials. Therefore, the cross-linked polymer can play a very good bonding role and alleviate the problems such as the rebound of the negative electrode plate during cycling of the battery to some extent.

In addition, compared with other binders such as styrene-butadiene rubber (SBR) or uncrosslinked linear binders that are commonly used in the art, the binder of the present application has excellent bonding property, good bonding force retention, ability to better coat the negative electrode active material and high bonding force, such that the rebound of the negative electrode plate during cycling can be reduced and the cycling performance of the battery can be improved.

In any embodiment, the negative electrode plate according to claim 1 is characterized in that the mass content of the polyol is in a range of 0.1-30%, optionally 1-15%, based on the total mass of the components (A) and (B).

When the content of the polyol cross-linking agent is too low, the number of ester groups formed by the esterification reaction between the hydroxyl group of a cross-linking agent and the carboxyl group of acrylic acid is too low, and the cross-linking rate of the acrylonitrile-acrylic acid copolymer binder is also too low, so it may impossible to form a three-dimensional network structure, and thus the effect of inhibiting the rebound of the electrode plate can not be achieved. On the contrary, when the content of the polyol cross-linking agent is too high, the cross-linking rate of the acrylonitrile-acrylic acid copolymer binder is too high, and the number of the carboxyl groups is reduced, which not only causes the decrease of the bonding force, but also may cause too large brittleness and modulus, and poor flexibility of the binder after cross-linking. Therefore, during cycling of the battery, with the expansion and contraction of the active materials, problems such as film peeling of the electrode plate are prone to occur.

An appropriate amount of the polyol cross-linking agent can ensure the formation of a suitable three-dimensional network structure by the acrylonitrile-acrylic acid copolymer and the cross-linking agent, which can restrain the expansion of the active materials and the rebound of the electrode plate, and meanwhile allow the electrode plate to maintain an enough flexibility to avoid problems such as film peeling of the electrode plate during cycling of the battery.

In any embodiment, the weight-average molecular weight of the component (A) is in a range of 300,000-1,200,000. When the weight-average molecular weight of the component (A) is lower than 300,000, the bonding force of the final cross-linked polymer is low, and problems such as film peeling are prone to occur. When the weight-average molecular weight of the component (A) is higher than 1,200,000, the viscosity of the solution and the slurry may increase during the preparation of the negative electrode slurry, which is not beneficial to the preparation of the negative electrode slurry and the coating of the negative electrode plate.

In any embodiment, the negative electrode film layer further comprises a polyether, and the polyether is optionally one or mere of polyethylene oxide, polytetrahydrofuran glycol, polyethylene glycol, polypropylene glycol and polyoxypropylene triol.

In any embodiment, the weight-average molecular weight of the polyether is in a range of 100-500,000 and the PDI thereof is in a range of 2-5.

The binder of the present application is an aqueous binder, and compared with SBR, due to the existence of strong intermolecular and intramolecular hydrogen bonds, the binder has a higher glass transition temperature Tg (for example 120°C) and too large brittleness, and problems such as coating cracking or cold pressing fracture are prone to occur during processing. On this basis, polyether additives with a wide molecular weight distribution are introduced in the present application. The polyether additives refer to polyether polyols with a molecular weight of 100-500,000, and optionally include one or more of polyethylene oxide, polytetrahydrofuran glycol, polyethylene glycol, polypropylene glycol and polyoxypropylene triol. Polyether can be coordinated with groups having a high polarity, thereby destroying the hydrogen bonds and van der Waals force between the molecules of acrylonitrile-acrylic acid copolymer to increase the distance between molecules, and then chemically modifying and toughening the binder, which increases the flexibility of the electrode plate.

In any embodiment, the mass ratio of the polyether to the cross-linked polymer is in a range of 0.015-0.6, optionally in a range of 0.02-0.5.

When the ratio is lower than 0.015, the content of the polyether additives is too low, and the coordination rate with groups having a high polarity in the binder (the cross-linked polymer) is low, which can only destroy a very small amount of hydrogen bonds between the molecules of acrylonitrile-acrylic acid copolymer, and thus the effect of increasing the flexibility can not be achieved. When the ratio is higher than 0.6, the content of the polyether additives is too high, which will reduce the modulus of the acrylonitrile-acrylic acid copolymer binder, so that the binder may be fatigued with the expansion of the active materials during cycling of the battery, thus accelerating the capacity attenuation of the battery.

In any embodiment, in the component (A), the mass percentage of the component (a) of acrylonitrile is 20-60%, the mass percentage of the component (b) of acrylic acid is 30-70%, and the mass percentage of the component (c) is 0-10%, based on the total mass of the components (a), (b) and (c).

In the cross-linked polymer used as a binder, acrylonitrile plays a major role in the bonding force, when the content of acrylonitrile is lower than 20%, the negative electrode plate has insufficient bonding force, and when the content of acrylonitrile is higher than 60%, since acrylonitrile has a high polarity, the solution formed during the processing of the negative electrode plate has poor flowability, and the viscosity of the negative electrode slurry is too high, which is not beneficial to the coating of the negative electrode plate; and the acrylic acid plays a role of cross-linking and improving lithium ion conduction, when the content thereof is lower than 30%, there are few cross-linking sites and the cross-linking effect is insufficient, and when the content thereof is higher than 70%, the bonding force of the negative electrode plate decreases.

In any embodiment, the mass content of the polyether in the negative electrode plate is in a range of 0.05-1%, optionally 0.08-0.5%, based on the total mass of the negative electrode film layer.

An appropriate amount of polyether additives can ensure a suitable coordination rate with groups having a high polarity in the binder, which plays a role of increasing the flexibility, ensures that there is no problems of coating cracking and cold-pressed edge decarbonization during the processing of the negative electrode plate, and allows the acrylonitrile-acrylic acid copolymer binder to maintain sufficient modulus to ensure excellent cycling performance in the battery life cycle.

In any embodiment, the mass content of the cross-linked polymer is in a range of 0.5-3%, optionally 0.8-2.3%, based on the total mass of the negative electrode film layer.

When the amount of the cross-linked polymer is within the above range, the rebound of the negative electrode plate during cycling can be better reduced, thereby better improving the cycling performance of the battery.

A second aspect of the present application provides a secondary battery comprising a negative electrode plate in the first aspect of the present application.

A third aspect of the present application provides a method for preparing a secondary battery comprising a negative electrode plate in the first aspect of the present application, the method comprising the steps of:
(1) mixing components (A) and (B) to obtain a cross-linked mixture; and
(2) preparing a negative electrode plate, which involves uniformly mixing a negative electrode active material, an optional conductive agent, an optional thickening agent and the cross-linked mixture obtained in step (1) to obtain a negative electrode slurry, then coating same onto a negative electrode current collector, followed by drying, cold pressing and slitting to obtain the negative electrode plate; and

the method further comprising the steps of preparing or obtaining a positive electrode plate, preparing or obtaining an electrolyte solution, and preparing or obtaining a separator, and
assembling the negative electrode plate, the positive electrode plate, the electrolyte solution, and the separator obtained in the above steps, and heating same under vacuum at 100-130°C for 5-15 h to achieve the cross-linking of at least a part of the components (A) and (B) in the negative electrode film layer.

### Detailed Description of Embodiments

Hereinafter, embodiments of the binder system, the negative electrode plate and the secondary battery of the present application are specifically disclosed in the detailed description. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the descriptions below are provided for enabling those skilled in the art to fully understand the present application, rather than limiting the subject matter disclosed in claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4 and 2-6. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application may be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprise" and "include" mentioned in the present application are openended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Currently, during cycling of lithium ion batteries, with the lithium de-intercalation reaction in the negative electrode and the swelling of the electrolyte solution, it is difficult for common negative electrode binder to maintain the restraint on the negative electrode active material, which leads to a large rebound of the negative electrode plate and a large expansion force of the battery, thus deteriorating the electrical performance and cycling performance of the secondary battery. In view of the above-mentioned problems, the present application provides a negative electrode plate, wherein the negative electrode film layer of the negative electrode plate comprises a cross-linked polymer as a binder. Because of the three-dimensional network structure, the cross-linked polymer has strong restraint on the active materials and can improve the capacity and cycling performance of the secondary battery. In addition, the present application further provides a polyether additive added in the negative electrode film layer, which can further improve the brittleness of the negative electrode film layer added with the cross-linked polymer.

Therefore, a first aspect of the present application provides a negative electrode plate, comprising a current collector and a negative electrode film layer, wherein the negative electrode film layer comprises a negative electrode active material and the following components:
(A) a copolymer formed from the following components:
   (a) acrylonitrile;
   (b) carboxylic acid containing 3 to 6 carbon atoms and at least one double bond, optionally acrylic acid; and
   (c) optionally other components, which are optionally selected from one or more of methacrylic acid, acrylate, hydroxyethyl acrylate, vinyl acetate and dimethyl diallyl ammonium chloride; and
(B) a polyol, optionally one or more of polyvinyl alcohol, ethylene glycol, propylene glycol, glycerol, trimethylolpropane, pentaerythritol and 1,4-butanediol.

According to the present application, the negative electrode film layer comprises the cross-linked polymer described above as a binder, and the cross-linked polymer is obtained by an esterification and cross-linking reaction between a copolymer of acrylonitrile and acrylic acid and a polyol cross-linking agent. It is now believed that the cross-linked polymer has a three-dimensional network structure, which not only have strong bonding force but also have strong restraint on the active materials. Therefore, the cross-linked polymer can play a very good bonding role and alleviate the problems such as the rebound of the negative electrode plate during cycling of the battery to some extent.

In addition, compared with other binders such as styrene-butadiene rubber (SBR) or uncrosslinked linear binders that are commonly used in the art, the binder of the present application further has the following advantages:
(1) excellent bonding property: the main chain of the cross-linked polymer binder contains groups having a strong polarity, such as nitrile group (the dielectric constant of the nitrile group (-CN) is 6.5), carboxyl group, etc., which can make the molecular chain of the binder and the groups on the surface of the current collector of the electrode plate form hydrogen bonds, complexation, etc., so as to ensure that the active material is firmly attached to the current collector. Therefore, the binder of the present application has excellent bonding property, which can ensure that the negative electrode plate will not have problems such as film peeling or powder falling during processing and cycling;
(2) retention of bonding force of electrode plate: the binder of the present application has a low swelling rate in the electrolyte solution, which is beneficial to maintain the bonding force of the electrode plate during cycling of the battery, thereby ensuring the capacity and cycling performance of the battery; and
(3) coating effect: the acrylonitrile-acrylic acid copolymer (that is, the copolymer in the component (A)) undergoes an esterification and cross-linking reaction with a polyol cross-linking agent to form a three-dimensional network structure, which can achieve better coating of the negative electrode active material, and inhibit the expansion and rebound of the negative electrode plate during cycling of the battery through the dual effects of bonding and coating, thereby effectively alleviating the structural collapse caused by the expansion of the active material during charging and discharging, reducing the consumption of lithium ions during cycling and improving the cycling capacity retention rate of lithium batteries. In addition, the negative electrode plate comprising the binder of the present application has low rebound during cycling of the battery, so that more active materials can be accommodated in the limited battery space, thereby improving the energy density of the battery.

In the present application, the component (A) is also referred as the matrix component of the binder of the present application, and the component (B) is referred as the cross-linking component of the binder of the present application.

It should be understood that although the negative electrode film layer described herein comprises the component (A) and the component (B), in some cases, a cross-linked polymer formed by cross-linking polymerization of the components (A) and (B) also presents. Therefore, in some optional embodiments, the negative electrode film layer further comprises a cross-linked polymer formed by cross-linking polymerization of the components (A) and (B), and the cross-linked polymer has a three-dimensional network structure, and when added as a binder, it can better bond or restrain the negative electrode active material, thereby reducing the expansion of the negative electrode plate during cycling and improving the cycling performance of the battery.

In some embodiments, the negative electrode plate according to claim 1 is characterized in that the mass content of the polyol is in a range of 0.1-30%, optionally 1-15%, based on the total mass of the components (A) and (B).

When the content of the polyol cross-linking agent is too low, the number of ester groups formed by the esterification reaction between the hydroxyl group of a cross-linking agent and the carboxyl group of acrylic acid is too low, and the cross-linking rate of the acrylonitrile-acrylic acid copolymer is also too low, so it may impossible to form three-dimensional network structure, and thus the effect of inhibiting the rebound of the electrode plate can not be achieved. On the contrary, when the content of the polyol cross-linking agent is too high, the cross-linking rate of the acrylonitrile-acrylic acid copolymer binder is too high, and the number of the carboxyl groups is reduced, which not only causes the decrease of the bonding force, but also may cause too large brittleness and modulus, and poor flexibility of the binder after cross-linking. Therefore, during cycling of the battery, with the expansion and contraction of the active materials, problems such as film peeling of the electrode plate are prone to occur.

An appropriate amount of the polyol cross-linking agent can ensure the formation of a suitable three-dimensional network structure by the acrylonitrile-acrylic acid copolymer and the cross-linking agent, which can restrain the expansion of the active materials and the rebound of the electrode plate, and meanwhile allow the electrode plate to maintain an enough flexibility to avoid problems such as film peeling of the electrode plate during cycling of the battery.

In some embodiments, the weight-average molecular weight of the component (A) is in a range of 300,000-1,200,000. Optionally, the weight-average molecular weight of the component (A) may be 300,000, 350,000, 400,000, 450,000, 500,000, 550,000, 600,000, 650,000, 700,000, 750,000, 800,000, 850,000, 900,000, 950,000, 1,000,000, 1,050,000, 1,100,000, 1,150,000, 1,200,000, or any value within any range between the above values. More optionally, the weight-average molecular weight of the component (A) is in a range of 600,000-1,000,000. When the weight-average molecular weight of the component (A) is lower than 300,000, the bonding force of the final cross-linked polymer is low, and problems such as film peeling are prone to occur. When the weight-average molecular weight of the component (A) is higher than 1,200,000, the viscosity of the solution and the slurry may increase during the preparation of the negative electrode slurry, which is not beneficial to the preparation of the negative electrode slurry and the coating of the negative electrode plate.

In some embodiments, the negative electrode film layer further comprises a polyether, and the polyether is optionally one or mere of polyethylene oxide, polytetrahydrofuran glycol, polyethylene glycol, polypropylene glycol and polyoxypropylene triol.

In some embodiments, the weight-average molecular weight of the polyether is in a range of 100-500,000 and the PDI thereof is in a range of 2-5. Optionally, the weight-average molecular weight of the polyether is in a range of 100-200,000.

The binder of the present application is an aqueous binder, and compared with SBR, due to the existence of strong intermolecular and intramolecular hydrogen bonds, the binder has a higher glass transition temperature T_{g} (for example 120°C) and too large brittleness, and problems such as coating cracking or cold pressing fracture may easily occur during processing. On this basis, polyether additives with a wide molecular weight distribution (a larger dispersion index (PDI)) are introduced in the present application. The polyether additives refer to polyether polyols with a molecular weight of 100-500,000, and optionally include one or more of polyethylene oxide, polytetrahydrofuran glycol, polyethylene glycol, polypropylene glycol and polyoxypropylene triol. Polyether can be coordinated with groups having a high polarity, thereby destroying the hydrogen bonds and van der Waals force between the molecules of acrylonitrile-acrylic acid copolymer to increase the distance between molecules, and then chemically modifying and toughening the binder, which increases the flexibility of the electrode plate.

In some embodiments, the mass ratio of the polyether to the cross-linked polymer is in a range of 0.015-0.6, optionally in a range of 0.02-0. 5. More optionally, the mass ratio of the polyether to the cross-linked polymer is in a range of 0.02-0.35.

When the ratio is lower than 0.015, the content of the polyether additives is too low, and the coordination rate with groups having a high polarity in the binder (the cross-linked polymer) is low, which can only destroy a very small amount of hydrogen bonds between the molecules of acrylonitrile-acrylic acid copolymer, and thus the effect of increasing the flexibility can not be achieved. When the ratio is higher than 0.6, the content of polyether additives is too high, which will reduce the modulus of the acrylonitrile-acrylic acid copolymer binder, and thus the binder may be fatigued with the expansion of the active materials during cycling of the battery, which accelerates the capacity attenuation of the battery and results in a decrease in the battery capacity retention rate.

In some embodiments, in the component (A), the mass percentage of the component (a) of acrylonitrile is 20-60%, the mass percentage of the component (b) of acrylic acid is 30-70%, and the mass percentage of the component (c) is 0-10%, based on the total mass of the components (a), (b) and (c).

In the cross-linked polymer used as a binder, acrylonitrile plays a major role in the bonding force, when the content of acrylonitrile is lower than 20%, the negative electrode plate has insufficient bonding force, and when the content of acrylonitrile is higher than 60%, since acrylonitrile has a high polarity, the solution formed during the processing of the negative electrode plate has poor flowability, and the viscosity of the negative electrode slurry is too high, which is not beneficial to the coating of the negative electrode plate; and the acrylic acid plays a role of cross-linking and improving lithium ion conduction, when the content thereof is lower than 30%, there are few cross-linking sites and the cross-linking effect is insufficient, and when the content thereof is higher than 70%, the bonding force of the negative electrode plate decreases.

In some embodiments, the mass content of the polyether in the negative electrode plate is in a range of 0.05-1%, optionally 0.08-0.5%, based on the total mass of the negative electrode film layer.

An appropriate amount of polyether additives can ensure a suitable coordination rate with groups having a high polarity in the binder, which plays a role of increasing the flexibility, ensures that there is no problems of coating cracking and cold-pressed edge decarbonization during the processing of the negative electrode plate, and allows the acrylonitrile-acrylic acid copolymer binder to maintain sufficient modulus to ensure excellent cycling performance in the battery life cycle.

In some embodiments, the mass content of the cross-linked polymer is in a range of 0.5-3%, optionally 0.8-2.3%, based on the total mass of the negative electrode film layer.

When the amount of the cross-linked polymer is within the above range, the rebound of the negative electrode plate during cycling can be better reduced, thereby better improving the cycling performance of the battery.

A second aspect of the present application provides a secondary battery comprising a negative electrode plate in the first aspect of the present application.

A third aspect of the present application provides a method for preparing a secondary battery in the second aspect of the present application, the secondary battery comprises a negative electrode plate in the first aspect of the present application, and the method comprises the steps of:
(1) mixing components (A) and (B) to obtain a cross-linked mixture; and
(2) preparing a negative electrode plate, which involves uniformly mixing a negative electrode active material, an optional conductive agent, an optional thickening agent and the cross-linked mixture obtained in step (1) to obtain a negative electrode slurry, then coating same onto a negative electrode current collector, followed by drying, cold pressing and slitting to obtain the negative electrode plate; and

the method further comprises the steps of preparing or obtaining a positive electrode plate, preparing or obtaining an electrolyte solution, and preparing or obtaining a separator, and
assembling the negative electrode plate, the positive electrode plate, the electrolyte solution, and the separator obtained in the above steps, and heating same under vacuum at 100-130°C for 5-15 h to achieve the cross-linking of at least a part of the components (A) and (B) in the negative electrode film layer.

In an optional embodiment, at least part of the cross-linking of the cross-linked polymer of the present application is completed during the assembly process of the secondary battery, that is, after assembling the negative electrode plate, the positive electrode plate, the electrolyte solution and the separator, the at least part of the cross-linking is completed after heating under vacuum at a high temperature for a period of time.

It should be understood that although the present application only limits the cross-linking of the components (A) and (B) in the step of battery assembly, the cross-linking of the components (A) and (B) may also occur at various stages in the battery preparation process, so the present application is not limited to the above description. In addition, it should be further understood that although the present application only describes the condition of heating under vacuum to cross-link the components (A) and (B), it is also falling within the scope of the present application to cross-link the components (A) and (B) in other ways in the prior art.

The secondary battery, battery module, battery pack, and power consuming device of the present application are described below.

In an embodiment of the present application, provided is a secondary battery.

Typically, a secondary battery comprises a positive electrode plate, a negative electrode plate, an electrolyte and a separator. During the charge/discharge of the battery, active ions are intercalated and de-intercalated back and forth between a positive electrode plate and a negative electrode plate. The electrolyte is located between the positive electrode plate and the negative electrode plate and functions for conducting ions. The separator is arranged between the positive electrode plate and the negative electrode plate, and mainly prevents the positive and negative electrodes from short-circuiting and enables ions to pass through.

### [Positive electrode plate]

The positive electrode plate comprises a positive electrode current collector and a positive electrode film layer provided on at least one surface of the positive electrode current collector, the positive electrode film layer comprising the positive electrode active material of the first aspect of the present application.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCMsn)), lithium nickel cobalt aluminum oxide (e.g., LiNi_{0.85}Co_{0.15}Al_{0.05}O₂), and modified compounds thereof, etc. Examples of lithium-containing phosphates of olivine structure may include, but are not limited to, at least one of lithium iron phosphate (e.g. LiFePO₄ (also referred to as LFP)), lithium iron phosphate and carbon composites, lithium manganese phosphate (e.g. LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

### [Negative electrode plate]

The negative electrode plate is a negative electrode plate in the first aspect of the present application, comprising a negative electrode current collector and a negative electrode film layer provided on at least one surface of the negative electrode current collector, wherein the negative electrode film layer comprises a negative electrode active material and the cross-linked polymer. Optionally, the negative electrode film layer comprises a polyether.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites, and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as a thickening agent (e.g., sodium carboxymethyl cellulose (CMC-Na)), etc.

In some embodiments, the negative electrode plate can be prepared as follows: dispersing the above-mentioned components for preparing the negative electrode plate, such as a negative electrode active material, a conductive agent, a binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

It should be understood that, in addition to the cross-linked polymer binder described in the present application, the negative electrode plate of the present application may comprise other binders, for example, at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). The present application is not intended to limit the binder used in the negative electrode plate to only the cross-linked polymer.

### [Electrolyte]

The electrolyte is located between the positive electrode plate and the negative electrode plate and functions for conducting ions. The type of the electrolyte is not specifically limited in the present application, and can be selected according to actual requirements. For example, the electrolyte may be liquid, gel, semi-solid or all solid.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally comprise an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

The shape of the secondary battery is not particularly limited in the present application and may be cylindrical, square or of any other shape.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

### I. Preparation of negative electrode plate comprising binder of the present application and secondary battery

### Example 1:

### Step 1: Preparation of mixture of acrylonitrile-acrylic acid copolymer and polyol

31.8 g of acrylonitrile and 32.8 g of acrylic acid monomers were charged into a three-necked flask equipped with a reflux condenser and a stirrer, then 500 ml of deionized water was added, and finally an initiator of ammonium persulfate and N,N-dimethyl bisacrylamide were added, wherein the amount of the initiator was 0.05% of the total mass of the monomers and the amount of N,N-dimethyl bisacrylamide was 0.015% of the total mass of the monomers. After stirring for a certain time under a stirring speed being controlled at 500 rpm, the reaction was carried out at 80°C for 3 h, and the acrylonitrile-acrylic acid copolymer was obtained after the reaction. The product was diluted with deionized water to a solid content of 5 wt%, neutralized with lithium hydroxide, and pH was adjusted to 7.0-8.5 to obtain a clear aqueous dispersion with a weight-average molecular weight of 800,000, as determined by GPC gel chromatography.

The aqueous dispersion of the acrylonitrile-acrylic acid copolymer was mixed with a cross-linking component of polyvinyl alcohol in a weight ratio of 99.9 : 0.1, and mechanically stirred at a speed of 500 rpm for 40 min to obtain a mixture of acrylonitrile-acrylic acid copolymer and polyvinyl alcohol, which was the raw material of the cross-linked polymer and formed the cross-linked polymer by cross-linking reaction in the following step.

### Step 2: Preparation of negative electrode plate

An active material of artificial graphite, a conductive agent of carbon black, the cross-linked polymer obtained in step 1 and a thickening agent of sodium carboxymethylcellulose (CMC) were dissolved into a solvent of deionized water in a weight ratio of 96.9 : 0.4 : 1.8 : 0.9, followed by uniformly mixing to prepare a negative electrode slurry; and the negative electrode slurry was uniformly coated onto a negative electrode current collector of a copper foil one or more times, followed by drying, cold pressing, and slitting to obtain the negative electrode plate.

### Step 3: Preparation of positive electrode plate

A nickel-cobalt-manganese (NCM) ternary material, a conductive agent of carbon black, and a binder of polyvinylidene fluoride (PVDF) in a weight ratio of 93 : 4 : 3 were stirred and uniformly mixed with N-methylpyrrolidone (NMP) to obtain a positive electrode slurry; and the positive electrode slurry was then uniformly coated onto a positive electrode current collector, followed by drying, cold pressing, and slitting to obtain the positive electrode plate.

### Step 4: Preparation of electrolyte solution

In an argon atmosphere glove box (H₂O < 0.1 ppm, O₂ < 0.1 ppm), organic solvents of ethylene carbonate (EC)/ethyl methyl carbonate (EMC) were uniformly mixed in a volume ratio of 3/7, and 12.5% of a lithium salt of LiPF6 was dissolved in the organic solvents and stirred until uniform to obtain the electrolyte solution in example 1.

### Step 5: Separator

A polypropylene film was used as a separator.

### Step 6: Preparation of secondary battery

The positive electrode plate, the separator and the negative electrode plate were wound, then hot-pressed and shaped, then packed in an aluminum shell, and heated under vacuum at 110°C for 10 h to achieve the cross-linking of the cross-linking component and the matrix component in the negative electrode film layer and remove the moisture in the electrode plate, and then the electrolyte solution was injected therein, followed by welding and sealing for formation capacity, so as to obtain the secondary battery.

### Examples 2-17 and Comparative examples 1-2:

The operations of examples 2-17 and comparative examples 1-2 were the same as those of example 1, and the differences were shown in Table 1.

The operations of examples 18-24 were the same as those of example 4, except that different types and amounts of polyether additives were added in the preparation of the negative electrode plate in step 2 (see Table 2 for details).

### II. Performance tests

### 1. Upwarped height

The negative electrode slurry in each example and comparative example was uniformly coated on a copper foil by means of a scraper with a coating thickness of 250 µm, then the copper foil coated with the negative electrode slurry was cut into small pieces of 10 × 10 cm, and baked on a heating table at 140°C for 30min, the upwarped height of the four corners of the dried electrode plate was measured with a scale, and the calculated average value was the upwarped height of the electrode plate.

### 2. Bonding force

The bonding force of the negative electrode plates of the examples and comparative examples of the present application was obtained by the following test methods:
the electrode plate prepared in step 2 was cut into a test sample with a size of 20 × 100 mm for later use; the side of the electrode plate to be tested was bonded with a double-sided tape and compacted with a pressing roller, allowing the double-sided tape to be fully attached to the electrode plate; the other side of the sample bonded with double-sided tape was adhered to the surface of a stainless steel, and then one end of the sample was bent reversely with a bending angle of 180°. A high-speed tension machine was used for testing, one end of the stainless steel was fixed to the fixture below the tension machine, and the bent end of the sample was fixed to the fixture above the tension machine, and the angle of the sample was adjusted to ensure that the upper and lower ends were in vertical positions, and then, the sample was stretched at a speed of 50 mm/min until the sample was completely peeled off from a substrate, and the displacement and force during the process were recorded. It was generally considered that the force at equilibrium was the bonding force of the electrode plate, which was in N/m.

### 3. Cohesive force

The cohesive force of the negative electrode plates of the examples and comparative examples of the present application was obtained by the following test methods:
the electrode plate prepared in step 2 was cut into a test sample with a size of 20 × 100 mm for later use; the side of the electrode plate to be tested was bonded with a low-viscosity transparent adhesive tape and compacted with a pressing roller, allowing the low-viscosity transparent adhesive tape to be fully attached to the electrode plate; and the other side of the sample bonded with transparent adhesive tape was adhered to the surface of a stainless steel, and then one end of the sample was bent reversely with a bending angle of 180°. A high-speed rail tension machine was used for testing, one end of the stainless steel was fixed to the fixture below the tension machine, and the bent end of the sample was fixed to the fixture above the tension machine, and the angle of the sample was adjusted to ensure that the upper and lower ends were in vertical positions, and then, the sample was stretched at a speed of 50 mm/min until the active material particles at the surface of the film layer were peeled off, and the displacement and force during the process were recorded. It was generally considered that the force at equilibrium was the cohesive force of the electrode plate, which was in N/m.

### 4. Test for rebound rate of negative electrode plate in fully charged state after 500 cycles

Example 1 was taken as an example, and the thickness of the negative electrode plate at 0 h after cold pressing was measured with a micrometer and was recorded as d0. The test process for the rebound rate of the negative electrode plate in a fully charged state after 500 cycles was as follows: the battery corresponding to example 1 was charged to 4.3 V at a constant current of 1/3 C at 25°C, then charged to a current of 0.05 C at a constant voltage of 4.3 V, allowed for standing for 5 min, and then discharged to 2.8 V at a current of 1/3 C. The above steps were repeated for the same battery for 500 cycles. The battery after cycling was charged to 4.3 V at a constant current of 1/3 C, then charged to a current of 0.05 C at a constant voltage of 4.3 V, and the fully charged battery was disassembled. A micrometer was used to test the thickness of the disassembled negative electrode plate, which was recorded as d1, and then the rebound rate of the negative electrode plate in a fully charged state after 500 cycles = (d1 - d0)/d0 × 100%. The test process for the comparative example and other examples was the same as that described above.

### 5. Test of capacity retention rate of battery

Example 1 was taken as an example, and the test process for the capacity retention rate of the battery was as follows: the battery corresponding to example 1 was charged to 4.3 V at a constant current of 1/3 C at 25°C, then charged to a current of 0.05 C at a constant voltage of 4.3 V, allowed for standing for 5 min, and then discharged to 2.8 V at a current of 1/3 C, and the obtained capacity was recorded as the initial capacity C₀. The above steps were repeated for the same battery above and the discharge capacity C₅₀₀ of the battery after 500 cycles was also recorded, and then the capacity retention rate of the battery after 500 cycles was calculated as P₅₀₀ = C₅₀₀/C₀ × 100%. The test process for the comparative example and other examples was the same as that described above.

The test results of each example and comparative example were shown in Table 1 below.

**Table 1**

| No. | | Binder | | | Negative electrode film layer | | Performance of electrode plate | | | Rebound rate of negative electrode plate after 500 cycles | Capacity retention rate of battery after 500 cycles |
|---|---|---|---|---|---|---|---|---|---|---|---|
| | Matrix component | | Cross-linking component | | Active material | Binder | Upw arpin g | Bonding force/ N/m | Cohe sive force/ N/m | | |
| | Type | Molecular weight | Type | Content% | | | | | | | |
| Example 1 | Acrylonitr ile-acrylic acid copolymer | 800,000 | Polyviny l alcohol | 0.1 | 96.90% | 1.80% | 12.4 | 16.7 | 78.2 | 38.51% | 88.31% |
| Example 2 | Acrylonitr ile-acrylic acid copolymer | 800,000 | Polyviny l alcohol | 0.5 | 96.90% | 1.80% | 12.2 | 16.5 | 78.3 | 38.03% | 88.37% |
| Example 3 | Acrylonitr ile-acrylic acid copolymer | 800,000 | Polyviny l alcohol | 1 | 96.90% | 1.80% | 12.4 | 16.3 | 79.9 | 37.23% | 91.45% |
| Example 4 | Acrylonitr ile-acrylic acid copolymer | 800,000 | Polyviny l alcohol | 5 | 96.90% | 1.80% | 12.3 | 15.9 | 86.2 | 36.16 | 92.54% |
| Example 5 | Acrylonitr ile-acrylic acid copolymer | 800,000 | Polyviny l alcohol | 10 | 96.90% | 1.80% | 12.4 | 15.4 | 83.2 | 35.97% | 92.34% |
| Example 6 | Acrylonitr ile-acrylic acid copolymer | 800,000 | Polyviny l alcohol | 15 | 96.90% | 1.80% | 12.3 | 14.5 | 81.5 | 35.89% | 92.03% |
| Example 7 | Acrylonitr ile-acrylic acid copolymer | 800,000 | Polyviny l alcohol | 20 | 96.90% | 1.80% | 12.7 | 13.7 | 78.9 | 35.93% | 91.64% |
| Example 8 | Acrylonitr ile-acrylic acid copolymer | 800,000 | Polyviny l alcohol | 25 | 96.90% | 1.80% | 12.6 | 13.2 | 76.5 | 35.83% | 90.81% |
| Example 9 | Acrylonitr ile-acrylic acid copolymer | 800,000 | Polyviny l alcohol | 30 | 96.90% | 1.80% | 12.4 | 12.8 | 74.3 | 35.79% | 88.45% |
| Example 10 | Acrylonitr ile-acrylic acid copolymer | 600,000 | Polyviny l alcohol | 5 | 96.90% | 1.80% | 11.8 | 13.4 | 83.6 | 36.83% | 89.87% |
| Example 11 | Acrylonitr ile-acrylic acid copolymer | 1,000,000 | Polyviny l alcohol | 5 | 96.90% | 1.80% | 13.1 | 16.5 | 87.2 | 36.12% | 92.60% |
| Example 12 | Acrylonitr ile-acrylic acid | 800,000 | Ethylene glycol | 5 | 96.90% | 1.80% | 11.9 | 15.3 | 73.7 | 38.44% | 88.60% |
| | copolymer | | | | | | | | | | |
| Example 13 | Acrylonitr ile-acrylic acid copolymer | 800,000 | Propylen e glycol | 5 | 96.90% | 1.80% | 12.7 | 15.5 | 75.9 | 37.66% | 92.93% |
| Example 14 | Acrylonitr ile-acrylic acid copolymer | 800,000 | Glycerol | 5 | 96.90% | 1.80% | 12.3 | 15.1 | 79.8 | 36.43% | 93.76% |
| Example 15 | Acrylonitr ile-acrylic acid copolymer | 800,000 | Trimeth ylolprop ane | 5 | 96.90% | 1.80% | 12.6 | 16.3 | 83.6 | 36.02% | 93.92% |
| Example 16 | Acrylonitr ile-acrylic acid copolymer | 800,000 | Pentaery thritol | 5 | 96.90% | 1.80% | 12.5 | 15.9 | 88.1 | 36.18% | 86.13% |
| Example 17 | Acrylonitr ile-acrylic acid copolymer | 800,000 | 1,4-Butanedi ol | 5 | 96.90% | 1.80% | 12.4 | 16.7 | 91.2 | 36.09% | 84.21% |
| Comparativ e example 1 | Acrylonitr ile-acrylic acid copolymer | 800,000 | / | / | 96.90% | 1.80% | 12.9 | 14.9 | 64.9 | 38.67% | 88.29% |
| Comparativ e example 2 | SBR | | / | / | 96.90% | 1.80% | 11.2 | 12.7 | 30.3 | 40.12% | 85.73% |

It can be seen from Table 1 that, compared with comparative examples 1-2, when the binders comprising a matrix component and a cross-linking component in examples 1-17 of the present application were used, the electrode plate had better bonding force and stronger cohesion force, as well as lower rebound rate after 500 cycles and higher battery capacity retention rate, which indicated that the cross-linked polymer binder of the present application can have better restraint and stronger bonding to the negative electrode plate, thus alleviating the rebound of the negative electrode plate and improving the cycling performance of the battery.

**Table 2**

| No. | Negative electrode film layer | | | | | | | | Performance of electrode plate | | Rebound rate of negative electrode plate after 500 cycles | Capacity retention rate of battery after 500 cycles |
|---|---|---|---|---|---|---|---|---|---|---|---|---|
| | Content of active material | Content of binder | Polyether | | | Conten t of polyeth er % | Ratio of polyether to binder | Upwar ped height/ mm | Bondin g force | Cohesi ve force | | |
| | | | Type | Molecular weight | PDI | | | | | | | |
| Example 4 | 96.90% | 1.80% | / | / | / | / | / | 12.3 | 15.9 | 86.2 | 36.16 | 92.54% |
| Example 18 | 96.85% | 1.80% | Polyethy lene oxide | 200,000 | 3.4 | 0.05 | 0.028 | 10.8 | 15.3 | 80.1 | 36.18% | 94.13% |
| Example 19 | 96.82% | 1.80% | Polytetra hydrofur an glycol | 3,000 | 2.5 | 0.08 | 0.044 | 10.6 | 15.7 | 80.3 | 36.22% | 94.20% |
| Example 20 | 96.60% | 1.80% | Polyethy lene glycol | 7,000 | 2.8 | 0.3 | 0.17 | 7.7 | 16.1 | 81.2 | 36.25% | 95.20% |
| Example 21 | 96.40% | 1.80% | Polyprop ylene glycol | 2,000 | 2.6 | 0.5 | 0.28 | 6.3 | 15.4 | 79.5 | 36.53% | 93.80% |
| Example 22 | 95.90% | 1.80% | Polyoxy propylen e triol | 3,000 | 3.2 | 1.0 | 0.56 | 4.9 | 15.9 | 80.6 | 36.22% | 91.32% |
| Example 23 | 96.20% | 1.80% | Stearic acid polyoxy ethylene ether | 500 | 2.3 | 0.7 | 0.39 | 5.4 | 15.6 | 79.5 | 36.48% | 93.26% |
| Example 24 | 96.87% | 1.80% | Dodecyl alcohol polyoxy ethylene ether | 600 | 2.6 | 0.03 | 0.017 | 11.1 | 16.3 | 81.1 | 36.17% | 94.22% |

It can be seen from Table 2 that after the addition of polyether, a lower upwarped height was achieved in examples 18-25 without deteriorating the bonding force, cohesion force and rebound rate of the electrode plates, which indicated that the polyether additives can significantly reduce the upwarped height of the negative electrode film layer and that the polyether additives can effectively improve the flexibility of the electrode plate. In addition, when the ratio of the polyether to the binder is greater than 0.5, the capacity retention rate of the battery decreased.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that may be conceived by those skilled in the art to the embodiments, and other modes constructed by combining some of the constituent elements of the embodiments also fall within the scope of the present application.

## Claims

1. A negative electrode plate, comprising a current collector and a negative electrode film layer, wherein the negative electrode film layer comprises a negative electrode active material and the following components:
(A) a copolymer formed from the following components:
(a) acrylonitrile;
(b) carboxylic acid containing 3 to 6 carbon atoms and at least one double bond, optionally acrylic acid; and
(c) optionally other components, which are optionally selected from one or more of methacrylic acid, acrylate, hydroxyethyl acrylate, vinyl acetate and dimethyl diallyl ammonium chloride; and
(B) a polyol, optionally one or more of polyvinyl alcohol, ethylene glycol, propylene glycol, glycerol, trimethylolpropane, pentaerythritol and 1,4-butanediol.

2. The negative electrode plate according to claim 1, **characterized in that** the mass content of the polyol is in a range of 0.1-30%, optionally 1-15%, based on the total mass of the components (A) and (B).

3. The negative electrode plate according to claim 1 or 2, **characterized in that** the weight-average molecular weight of the component (A) is in a range of 300,000-1,200,000.

4. The negative electrode plate according to any one of claims 1-3, **characterized in that** the negative electrode film layer further comprises a polyether, and the polyether is optionally one or mere of polyethylene oxide, polytetrahydrofuran glycol, polyethylene glycol, polypropylene glycol, polyoxypropylene triol, stearic acid polyoxyethylene ether, and dodecyl alcohol polyoxyethylene ether.

5. The negative electrode plate according to claim 4, **characterized in that** the weight-average molecular weight of the polyether is in a range of 100-500,000 and the PDI thereof is in a range of 2-5.

6. The negative electrode plate according to claim 4 or 5, **characterized in that** the mass ratio of the polyether to the cross-linked polymer is in a range of 0.015-0.6, optionally in a range of 0.02-0.5.

7. The negative electrode plate according to any one of claims 1-6, **characterized in that** in the component (A), the mass percentage of the component (a) of acrylonitrile is 20-60%, the mass percentage of the component (b) of acrylic acid is 30-70%, and the mass percentage of the component (c) is 0-10%, based on the total mass of the components (a), (b) and (c).

8. The negative electrode plate according to any one of claims 4-7, **characterized in that** the mass content of the polyether is in a range of 0.05-1%, optionally 0.08-0.5%, based on the total mass of the negative electrode film layer.

9. The negative electrode plate according to any one of claims 1-8, **characterized in that** the mass content of the cross-linked polymer is in a range of 0.5-3%, optionally 0.8-2.3%, based on the total mass of the negative electrode film layer.

10. A secondary battery, comprising a negative electrode plate of any one of claims 1-9.

11. A method for preparing a secondary battery comprising a negative electrode plate of any one of claims 1-9, the method comprising the steps of:
(1) mixing components (A) and (B) to obtain a cross-linked mixture; and
(2) preparing a negative electrode plate, which involves uniformly mixing a negative electrode active material, an optional conductive agent, an optional thickening agent and the cross-linked mixture obtained in step (1) to obtain a negative electrode slurry, then coating same onto a negative electrode current collector, followed by drying, cold pressing and slitting to obtain the negative electrode plate; and
the method further comprising the steps of preparing or obtaining a positive electrode plate, preparing or obtaining an electrolyte solution, and preparing or obtaining a separator, and
assembling the negative electrode plate, the positive electrode plate, the electrolyte solution, and the separator obtained in the above steps, and heating same under vacuum at 100-130°C for 5-15 h to achieve the cross-linking of at least a part of the components (A) and (B) in the negative electrode film layer.
